# EUROPÄISCHE PATENTSCHRIFT

(11) **EP 3 643 560 B1**
(45) Veröffentlichungstag und Bekanntmachung des Hinweises auf die Patenterteilung: **02.06.2021**
(21) Anmeldenummer: 19200993.4
(22) Anmeldetag: 02.10.2019
(51) Int. Cl.: B60N 2/38, B60N 2/50, B60N 2/52, B60N 2/16

(54) **FAHRZEUGSITZ MIT NICKFEDEREINHEIT**
VEHICLE SEAT WITH A NICK SPRING UNIT
SIÈGE DE VÉHICULE POURVU D'UNITÉ DE RESSORT À TANGAGE

(30) Priorität: 04.10.2018 DE 102018124507
(43) Veröffentlichungstag der Anmeldung: 29.04.2020
(73) Patentinhaber: GRAMMER AG, 92289 Ursensollen (DE)
(72) Erfinder: Dotzler, Florian, 92242 Hirschau (DE); Haller, Erwin, 92262 Birgland (DE); Krivenkov, Konstantin, 92224 Amberg (DE)
(74) Vertreter: Hannke, Christian

(56) Entgegenhaltungen:
- DE-A1-102009 041 811
- FR-A- 912 187
- US-A1- 2012 091 773

## Beschreibung

Die Erfindung betrifft einen Fahrzeugsitz mit einer Nickfedereinheit, wobei ein Fahrzeugsitzoberteil und ein Fahrzeugsitzunterteil des Fahrzeugsitzes mittels einer Scherengestellanordnung, umfassend einen ersten Scherenarm und einen zweiten Scherenarm, welche sich in einem Bereich in Fahrzeugsitzbreitenrichtung gesehen kreuzen, relativ zueinander bewegbar verbunden sind.

Fahrzeugsitze mit Nickfedereinheiten sind aus dem Stand der Technik bekannt, wie zum Beispiel aus der DE 2010 034 857 A1. Derartige Nickfederungen sind jedoch schwer zu realisieren, und benötigen aufgrund ihrer Ausgestaltung bei einer Nickbewegung einen deutlich erhöhten Raumbedarf sowohl in X- als auch in Y-Richtung. Aus der US 2012/091773 ist ein Fahrzeugsitz mit Nickfedereinheiten und mit einer ein-und ausfahrbaren Fluidfeder höhenverstellbaren Gestell bekannt.

Es ist daher Aufgabe der vorliegenden Erfindung, einen Fahrzeugsitz mit einer Nickfedereinheit bereit zustellen, welche konstruktiv einfacher als im Stand der Technik dargestellt ausgebildet ist.

Die zugrundeliegende Aufgabe der vorliegenden Anmeldung wird durch die Merkmale des Patentanspruches 1 gelöst.

Kerngedanke der vorliegenden Erfindung ist es, einen Fahrzeugsitz mit einer Nickfedereinheit bereit zustellen, wobei ein Fahrzeugsitzoberteil und ein Fahrzeugsitzunterteil mittels einer Scherengestellanordnung, umfassend einen ersten Scherenarm und einen zweiten Scherenarm, welche sich in einem ersten Bereich in Fahrzeugsitzbreitenrichtung gesehen kreuzen, relativ zueinander bewegbar verbunden sind, wobei die Nickfedereinheit einen Federelementträger und ein Federelement umfasst, wobei das Federelement einerseits mit dem Fahrzeugsitzoberteil, dem Fahrzeugsitzunterteil oder den Scherenarmen und andererseits mit dem Federelementträger verbunden ist, welcher drehbar um eine zweite Drehachse mit dem ersten Scherenarm und drehbar um eine dritte Drehachse mit dem zweiten Scherenarm verbunden ist.

Bei einer relativen Bewegung des Fahrzeugsitzoberteils gegenüber dem Fahrzeugsitzunterteil in vertikaler Richtung aufgrund einer externen Krafteinwirkung auf den Fahrzeugsitz wird durch die drehbare Anordnung des Federelementträgers an dem ersten bzw. dem zweiten Scherenarm eine entsprechende Bewegung des Federelementträgers ausgeführt. Das heißt, dass bei einer vertikalen Auslenkung, also einer Auslenkung in einer Fahrzeugsitzhöhenrichtung, der Federelementträger eine lineare Verlagerung entsprechend dem Fahrzeugsitzoberteil erfährt. Bei einer Nickbewegung des Fahrzeugsitzes, das heißt bei einer Drehung des Fahrzeugsitzoberteils gegenüber dem Fahrzeugsitzunterteil wird der Federelementträger ebenso einer derartigen Nickbewegung unterworfen.

Erfindungsgemäß kreuzen sich der erste Scherenarm und der zweite Scherenarm in Fahrzeugsitzbreitenrichtung gesehen in dem ersten Bereich, das heißt, dass zwischen dem ersten Scherenarm und dem zweiten Scherenarm keine bauliche Verbindung vorgesehen ist mit Ausnahme des Federelementträgers. Das bedeutet insbesondere, dass bei einer Bewegung des Fahrzeugsitzoberteils gegenüber dem Fahrzeugsitzunterteil der erste Bereich, welcher den Kreuzungsbereich der Scherenarme darstellt, entsprechend der Bewegung des Fahrzeugsitzes nachfolgen muss.

Es kann jedoch vorgesehen sein, dass der erste Scherenarm und der zweite Scherenarm kraftverbunden sind, beispielsweise durch eine Reibungskraft, falls die Scherenarme miteinander in Kontakt stehen.

Durch die zuvor beschriebene Zwangsführung bzw. Zwangsbewegung des Federelementträgers aufgrund der Bewegung des Fahrzeugsitzoberteils relativ zu dem Fahrzeugsitzunterteil wird eine Federkraft des Federelementes hervorgerufen.

Diese Auswirkungen auf ein entsprechendes Federelement werden im Folgenden nochmals kurz dargestellt.

Gemäß einer besonders bevorzugten Ausführungsform sind die Fahrzeugsitzbreitenrichtung, die zweite Drehachse und die dritte Drehachse parallel zueinander angeordnet. Hierdurch kann ein Verkanten des Scherengestells bzw. der Scherengestellanordnung mit dem Federelementträger verhindert werden, insbesondere bei einer Relativbewegung des Fahrzeugsitzoberteils zu dem Fahrzeugsitzunterteil.

Gemäß einer weiteren bevorzugten Ausführungsform ist der erste Scherenarm mittels eines ersten Festlagers mit dem Fahrzeugsitzunterteil und mittels eines ersten Loslagers mit dem Fahrzeugsitzoberteil und der zweite Scherenarm mittels eines zweiten Festlagers mit dem Fahrzeugsitzoberteil und mittels eines zweiten Loslagers mit dem Fahrzeugsitzunterteil verbunden.

Besonders vorteilhaft sind in einer Fahrzeugsitzlängsrichtung gesehen das erste Festlager vor dem zweiten Festlager und das zweite Loslager hinter dem ersten Loslager angeordnet; oder das erste Festlager ist hinter dem zweiten Festlager und das zweite Loslager vor dem ersten Loslager angeordnet.

Besonders bevorzugt ist dabei die Länge eines Abschnitts des ersten Scherenarms vom ersten Loslager zu dem ersten Bereich und eine Länge des Abschnittes von dem ersten Bereich bis zum ersten Loslager des ersten Scherenarms in einem ersten Zustand unterschiedlich lang ausgebildet. Das selbe kann auch für den zweiten Scherenarm gelten. Das heißt, dass ausgehend von dem ersten Bereich hin zum Fahrzeugsitzoberteil andere Längen der Scherenarme vorgesehen sind als von dem ersten Bereich hin zu dem Fahrzeugsitzunterteil. Bevorzugt können Längen hinsichtlich des ersten Bereichs besser angegeben werden durch die Angabe eines ersten Kreuzungspunkts, welcher als Mittelpunkt des ersten Bereichs definiert werden kann. Beispielsweise ist der erste Bereich ein Trapez oder ein Parallelogramm, dessen Schnittpunkt seiner Diagonalen den Mittelpunkt und entsprechend den ersten Kreuzungspunkt darstellen.

Hierdurch kann eine gewisse Asymmetrie des Scherengestells bzw. der Scherengestellanordnung in Fahrzeugsitzlängsrichtung gesehen erreicht werden. Eine derartige Ausgestaltung kann einer Nickbewegung des Fahrzeugsitzoberteils gegenüber dem Fahrzeugsitzunterteil besonders gut nachfolgen.

Gemäß einer weiteren bevorzugten Ausführungsform sind der erste Scherenarm mittels eines ersten Loslagers mit dem Fahrzeugsitzoberteil und mittels eines dritten Loslagers mit dem Fahrzeugsitzunterteil und der zweite Scherenarm mittels eines zweiten Loslagers mit dem Fahrzeugsitzunterteil und mittels eines vierten Loslagers mit dem Fahrzeugsitzoberteil verbunden. Insbesondere verbindet ein erstes Verbindungselement den ersten Scherenarm und das Fahrzeugsitzunterteil und ein zweites Verbindungselement den zweiten Scherenarm und das Fahrzeugsitzoberteil miteinander.

Gemäß der Ausgestaltung des ersten Scherenarms und des zweiten Scherenarms mittels von vier Loslagern zur Verbindung mit dem Fahrzeugsitzoberteil und dem Fahrzeugsitzunterteil wird erreicht, dass bei einer Nickbewegung des Fahrzeugsitzes und bei einer entsprechenden Nachfolgung des Fahrzeugsitzoberteils gegenüber dem Fahrzeugsitzunterteil eine stärkere Nickbewegung des Fahrzeugsitzes erhalten wird. Ein weiterer Grund für diese Ausgestaltung ist es, dass durch das Verbindungsteil, welches mit dem Fahrzeugsitzoberteil verbunden ist, das Fahrzeugsitzoberteil im Wesentlichen exakt über dem Fahrzeugsitzunterteil, insbesondere bei einer vertikalen Bewegung, angeordnet ist.

Um dabei die Freiheitsgrade jedoch weiter zu minimieren, sind entsprechend ein erstes Verbindungselement und ein zweites Verbindungselement vorgesehen, welche durch die entsprechende Anordnung mit dem ersten bzw. zweiten Scherenarm und dem Fahrzeugsitzoberteil bzw. dem Fahrzeugsitzunterteil die Freiheitsgrade der vier Loslager minimiert.

Besonders vorteilhaft gemäß einer weiteren Ausführungsform sind dabei in einer Fahrzeugsitzlängsrichtung das erste Loslager vor dem zweiten Loslager und das dritte Loslager vor dem vierten Loslager angeordnet. Auch hier wird durch eine entsprechende Anordnung, insbesondere auch mit einer Veränderung der Längen des Scherengestells bzw. der Scherenarme, wie zuvor beschrieben, eine gewisse Asymmetrie erreicht. Dabei unterscheidet sich die Länge des ersten Loslagers zu der ersten Drehachse von der Länge der ersten Drehachse bis zu dem dritten Loslager. Entsprechendes gilt für das zweite Loslager und das vierte Loslager.

Gemäß einer weiteren bevorzugten Ausführungsform ist das Federelement ein Blattfederelement. Besonders bevorzugt ist dieses Blattfederelement einerseits mit dem Federelementträger biegesteif verbunden und mit dem zweiten Verbindungselement gleitverbunden. Vorzugsweise kann das Blattfederelement einerseits mit dem zweiten Verbindungselement verbunden sein und andererseits mit dem Federträgerelement durch ein lineares Führungselement in Fahrzeugsitzlängsrichtung gleitend verbunden sein, wobei das Blattfederelement mit dem zweiten Verbindungselement bevorzugt drehfest verbunden ist.

Besonders bevorzugt ist das zweite Verbindungselement derart lang ausgebildet, dass in einer unverschwenkten Stellung des Fahrzeugsitzes, das heißt, dass zunächst keine Krafteinwirkung auf dem Fahrzeugsitz vorgesehen ist, das Blattfederelement in Fahrzeugsitzlängsrichtung und Fahrzeugsitzbreitenrichtung erstreckend angeordnet ist. Dies bedeutet insbesondere, dass die Blattfeder keine Kraft erzeugt, da diese noch nicht verbogen ist oder gerade verbogen wird. Wie bereits zuvor erwähnt, ist dabei die Verbindung des Blattfederelements mit dem zweiten Verbindungselement eine Gleitverbindung, sodass bei einer Nickbewegung, also einer Bewegung des Fahrzeugsitzoberteils gegenüber dem Fahrzeugsitzunterteil, die Länge des Blattfederelements zwischen der Gleitverbindung und der biegesteifen Verbindung mit dem Federträgerelement entsprechend automatisch angepasst werden kann. Bei Durchführung einer Nickbewegung wird das Blattfederelement entsprechend der Gleitverbindung mit dem zweiten Verbindungselement der Nickbewegung des Fahrzeugsitzoberteils bzw. des Federträgerelements nachgeführt und das Blattfederelement dabei verbogen, sodass eine Federkraft bzw. eine Rückstellkraft erzeugt wird.

Gemäß einer weiteren bevorzugten Ausführungsform ist das Federelement eine elastisch deformierbare Luftfeder, welche mit dem Fahrzeugsitzoberteil oder dem Fahrzeugsitzunterteil verbunden ist.

Durch eine Nickbewegung des Fahrzeugsitzes und einer entsprechenden Nachführung des Federträgerelements, welches in Verbindung mit der elastisch deformierbaren Luftfeder steht, wird durch das Federträgerelement eine Deformierung der elastisch deformierbaren Luftfeder hervorgerufen, wodurch eine Federkraft bzw. eine Rückstellkraft der elastisch deformierbaren Luftfeder erzeugt wird.

Gemäß einer weiteren bevorzugten Ausführungsform weist das Federelement eine erste Zugfeder und eine zweite Zugfeder auf, wobei die erste Zugfeder mit dem ersten Scherenarm und dem Federelementträger und die zweite Zugfeder mit dem zweiten Scherenarm und dem Federelementträger verbunden ist.

Durch eine Nickbewegung des Fahrzeugsitzes und der daraus resultierenden Bewegung des Federelementträgers wird abhängig von der Richtung der Nickbewegung durch Zugeinwirkung auf die erste Zugfeder oder die zweite Zugfeder eine Federkraft bzw. eine Rückstellkraft der entsprechenden Zugfeder hervorgerufen.

Gemäß einer besonders bevorzugten Ausführungsform ist der Federelementträger U-förmig ausgebildet mit einem ersten Schenkel, einem zweiten Schenkel und einer Schenkelverbindung, wobei in Richtung der Schenkel gesehen die zweite Drehachse und die dritte Drehachse den gleichen Abstand zu der Schenkelverbindung aufweisen.

Durch den Abstand der zweiten Drehachse und der dritten Drehachse zu der Schenkelverbindung wird ein Hebelarm ausgebildet zwischen der Verbindungslinie der zweiten Drehachse und der dritten Drehachse und dem Federträgerelement, insbesondere der Schenkelverbindung, welches insgesamt zu einem Drehmoment führt bei einer Belastung durch z.B. eine Feder, welches als ein rückstellendes Moment für die Nickfederung wirkt. Die Stärke des Drehmoments hängt dabei natürlich von der Federkraft des entsprechenden Federelements und dem Abstand der zweiten und dritten Drehachse zu der Schenkelverbindung ab.

Gemäß einer besonders bevorzugten Ausführungsform ist dabei zur besseren Einleitung der Federkraft auf den Federelementträger die zweite Drehachse und die dritte Drehachse in einer Fahrzeugsitzhöhenrichtung gesehen oberhalb oder unterhalb der ersten Drehachse angeordnet.

Weitere vorteilhafte Ausführungsformen ergeben sich auf den Unteransprüchen.

Weitere Ziele, Vorteile und Zweckmäßigkeiten der vorliegenden Erfindung sind der nachfolgenden Beschreibung in Verbindung mit den Zeichnungen zu entnehmen. Hierbei zeigen:
- Fig. 1A-1C: Fahrzeugsitz in einem ersten Zustand und in einem zweiten Zustand;
- Fig. 2A-2H: Fahrzeugsitz in verschiedensten Zuständen mit einer Luftfeder als Federelement mit einer ersten Scherengestellanordnung;
- Fig. 3A-3E: Fahrzeugsitz in verschiedensten Zuständen mit einer zweiten Scherengestellanordnung;
- Fig. 4A-4B: Fahrzeugsitz mit einem weiteren Beispiel für ein Federelement;
- Fig. 5A-B: Fahrzeugsitz mit einem weiteren Beispiel für ein Federelement;
- Fig. 6A-6B: Fahrzeugsitz mit einer ersten Anordnung des Federträgerelements;
- Fig. 6C-6D: Fahrzeugsitz mit einer zweiten Anordnung des Federträgerelements.

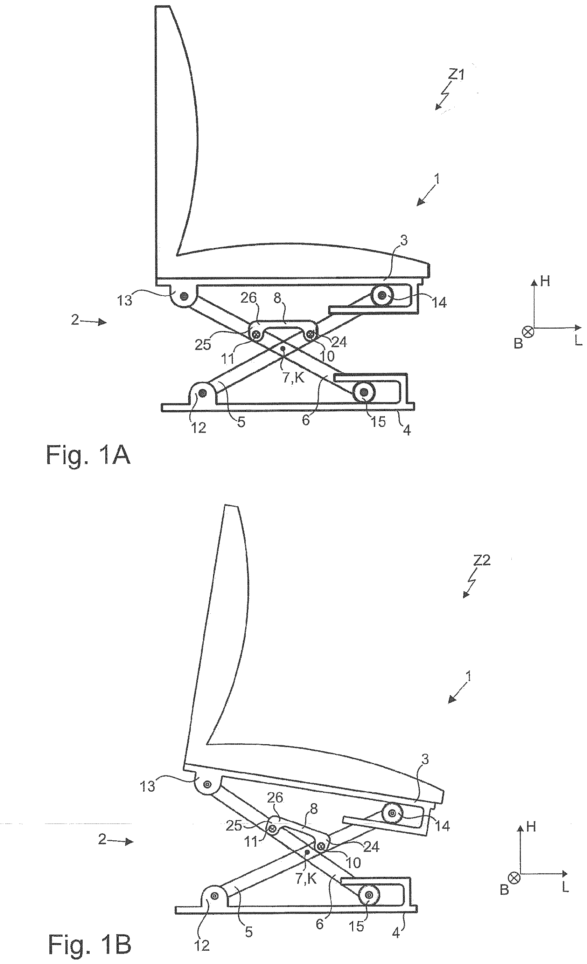

In der Figur 1A ist ein Fahrzeugsitz 1 zu erkennen, umfassend eine Nickfederung 2, ein Fahrzeugsitzoberteil 3 und ein Fahrzeugsitzunterteil 4. Das Fahrzeugsitzoberteil 3 ist mit dem Fahrzeugsitzunterteil 4 mittels einer Scherengestellanordnung umfassend einen ersten Scherenarm 5 und einen zweiten Scherenarm 6 miteinander verbunden, sodass eine Relativbewegung des Fahrzeugsitzoberteils 3 gegenüber dem Fahrzeugsitzunterteil 4 möglich ist. Der erste Scherenarm 5 und der zweite Scherenarm 6 sind dabei kreuzend miteinander angeordnet mit einem ersten Bereich K bzw. Kreuzungsbereich K mit einem ersten Kreuzungspunkt 7, in Fahrzeugsitzbreitenrichtung B gesehen. Weiter ist ein Federträgerelement 8 vorgesehen, welches mit dem ersten Scherenarm 5 und dem zweiten Scherenarm 6 drehbar verbunden ist, jeweils um eine zweite Drehachse 10 mit dem ersten Scherenarm 5 und um eine dritte Drehachse 11 mit dem zweiten Scherenarm 6.

Bei einer Verlagerung des Fahrzeugsitzoberteils 3 relativ zum Fahrzeugsitzunterteil 4 wird das Scherengestell mit dem ersten Scherenarm 5 und dem zweiten Scherenarm 6 entsprechend bewegt, so dass sich aufgrund dieser Bewegung der Kreuzungsbereich K bzw. der Kreuzungspunkt 7 entsprechend verschiebt.

Das Scherengestell bzw. die Scherengestellanordnung ist hierbei derart ausgebildet, dass der erste Scherenarm 5 mittels eines ersten Festlagers 12 mit dem Fahrzeugsitzunterteil 4 und mittels eines ersten Loslagers 14 mit dem Fahrzeugsitzoberteil 3 verbunden ist. Der zweite Scherenarm 6 ist dabei mittels eines zweiten Festlagers 13 mit dem Fahrzeugsitzoberteil 3 und mittels eines zweiten Loslagers 15 mit dem Fahrzeugsitzunterteil 4 verbunden.

Der Federelementträger 8 ist dabei U-förmig ausgebildet und weist einen ersten Schenkel 24, einen zweiten Schenkel 25 und eine Schenkelverbindung 26 auf, wobei die Schenkel 24, 25 mit der Schenkelverbindung 26 verbunden sind. Dabei ist der Federelementträger 8 mittels der Schenkel 24, 25 mit dem entsprechenden Scherenarm 5, 6 verbunden.

In der Figur 1A ist dabei der Fahrzeugsitz 1 in einem ersten Zustand Z1 gezeigt, das heißt, dass sich der Fahrzeugsitz 1 in einer nicht-verschwenkten Position bzw. einem nicht-verschwenkten Zustand befindet, das heißt, dass keine externe Krafteinwirkung auf den Fahrzeugsitz 1 vorliegt.

Hingegen ist jedoch in der Figur 1B der Fahrzeugsitz 1 in einem zweiten Zustand Z2 gezeigt, das heißt, dass der Fahrzeugsitz in diesem Fall nach vorne gekippt ist aufgrund einer Nickbewegung des Fahrzeuges bzw. des Fahrzeugsitzes 1.

Wie entsprechend dem Vergleich der Figuren 1A und 1B zu entnehmen ist, wird bei einer Nickbewegung des Fahrzeugsitzes 1 das Fahrzeugsitzoberteil 3 gegenüber dem Fahrzeugsitzunterteil 4 geneigt, wodurch der Federelementträger 8 aufgrund seiner Verbindung mit den Scherenarmen 5, 6 entsprechend der Bewegung des Fahrzeugsitzoberteils 3 nachfolgt.

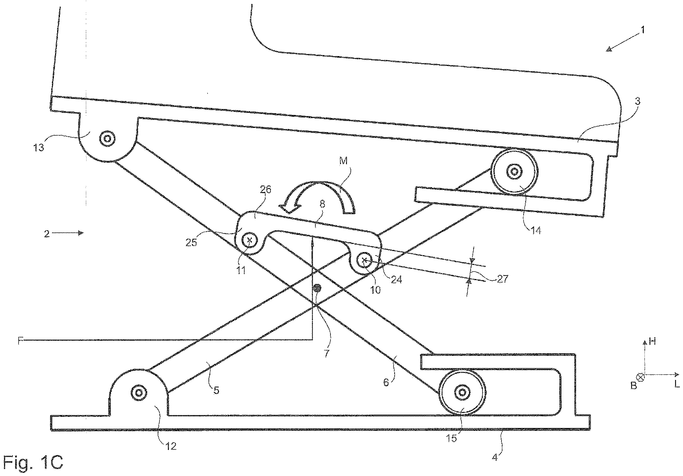

Es wird im Hinblick auf die Figuren 1A und 1B darauf hingewiesen, dass ein Federelement zunächst nicht gezeigt worden ist, da das allgemeine Funktionsprinzip unabhängig von der Art des Federelements zu erkennen ist. Das allgemeine Funktionsprinzip wird anhand der Figur 1C näher erläutert.

Wie zu erkennen ist, befindet sich der Fahrzeugsitz 1 in dem zweiten Zustand Z2, das heißt in einer genickten Position.

Dadurch, dass ein Abstand 27 der zweiten Drehachse 10 zu der Schenkelverbindung 26 in Richtung des Schenkels 24 gesehen vorhanden ist, wird mittels einer Federkraft F, welche durch die Nickbewegung auf das nicht gezeigte Federelement einwirkt, wird ein Rückstellmoment bzw. Drehmoment M erzeugt, welches mit dem Pfeil entsprechend dargestellt wird. Alternativ gesprochen ist der Abstand 27 der Abstand zwischen der Verbindungslinie der zweiten Drehachse 10 und der dritten Drehachse 11 zu der Schenkelverbindung 26.

Die Größe des Rückstellmoments M hängt dabei natürlich einerseits von der eingebrachten Federkraft F und andererseits von der Größe des Abstandes 27 ab. Das heißt insbesondere, dass bei einer starken Nickbewegung des Fahrzeugsitzes bzw. des Fahrzeugsitzoberteils 3 eine große Krafteinleitung auf das entsprechende Federelement (hier nicht gezeigt) zu einem großen oder größeren Rückstellmoment M führt.

Der Abstand 27 ist hierbei gleichzusetzen mit einem entsprechenden Hebelarm, welcher für das Rückstellmoment M vorgesehen ist.

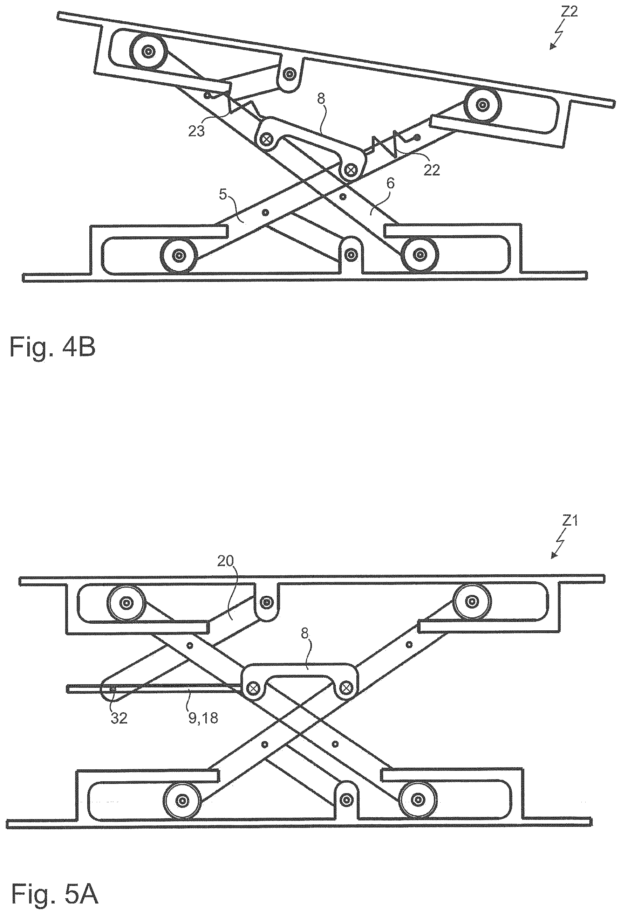

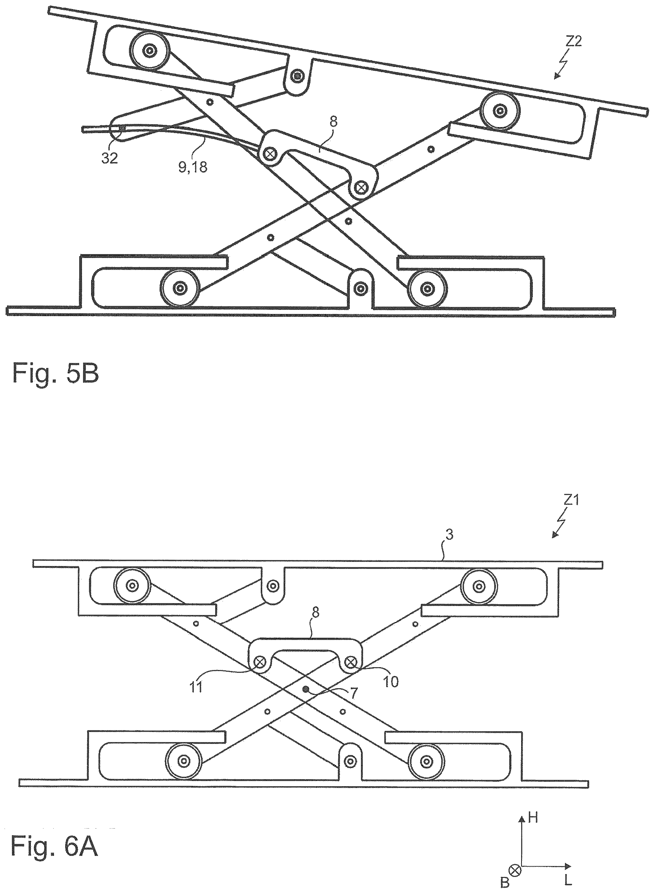

Dieses Prinzip ist dabei unabhängig von der Art des Federelements bzw. unabhängig von der Art der Ausgestaltung des Scherengestells bzw. der Scherenarme, mit Ausnahme der Ausführungsformen, welche in den Figuren 5A und 5B dargestellt sind.

Das heißt insbesondere, dass verschiedene Ausführungsformen der vorliegenden Erfindung miteinander kombinierbar sind und entsprechende Ausgestaltungen hinsichtlich des Federelements und des Scherengestells bzw. der Scherengestellanordnung beliebig austauschbar und kombinierbar sind.

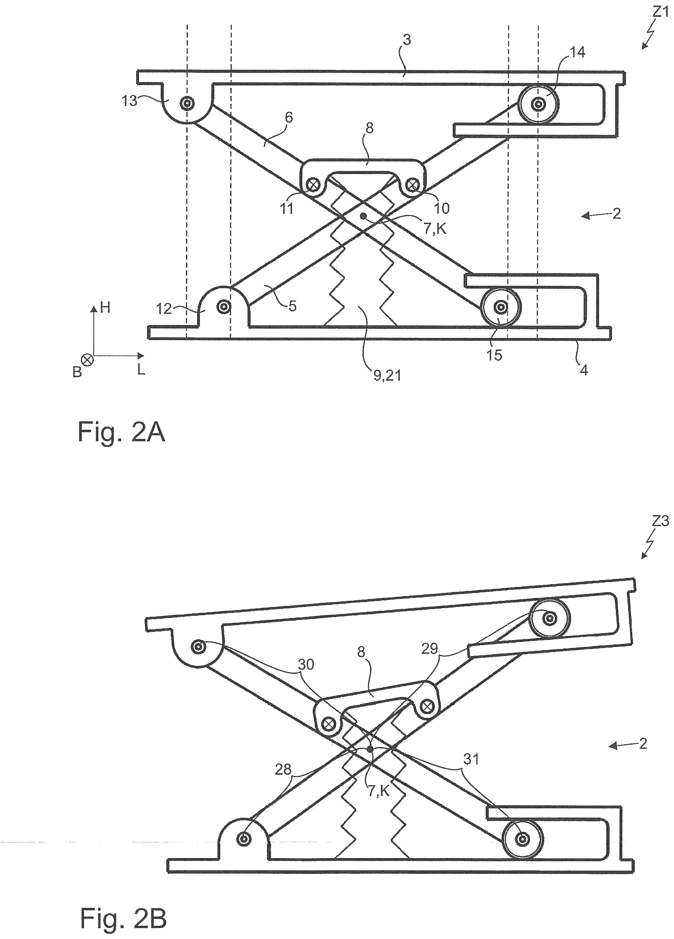

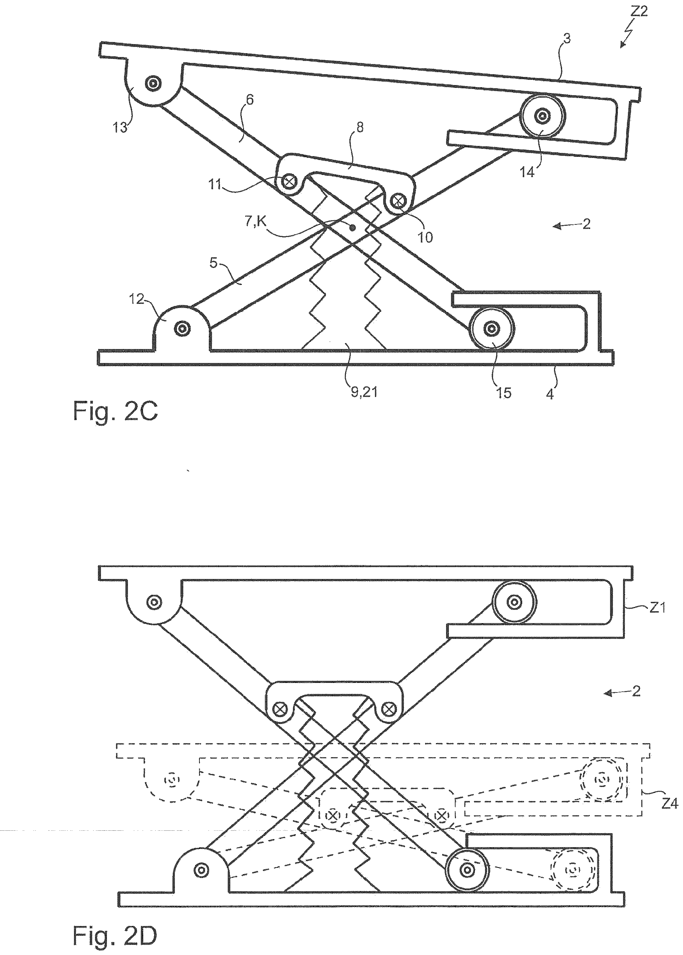

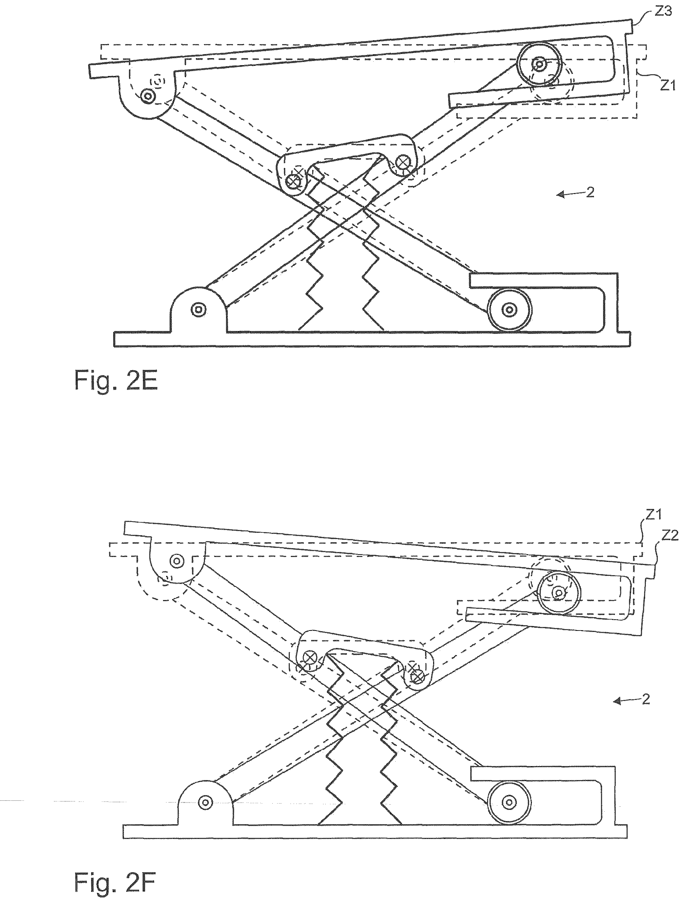

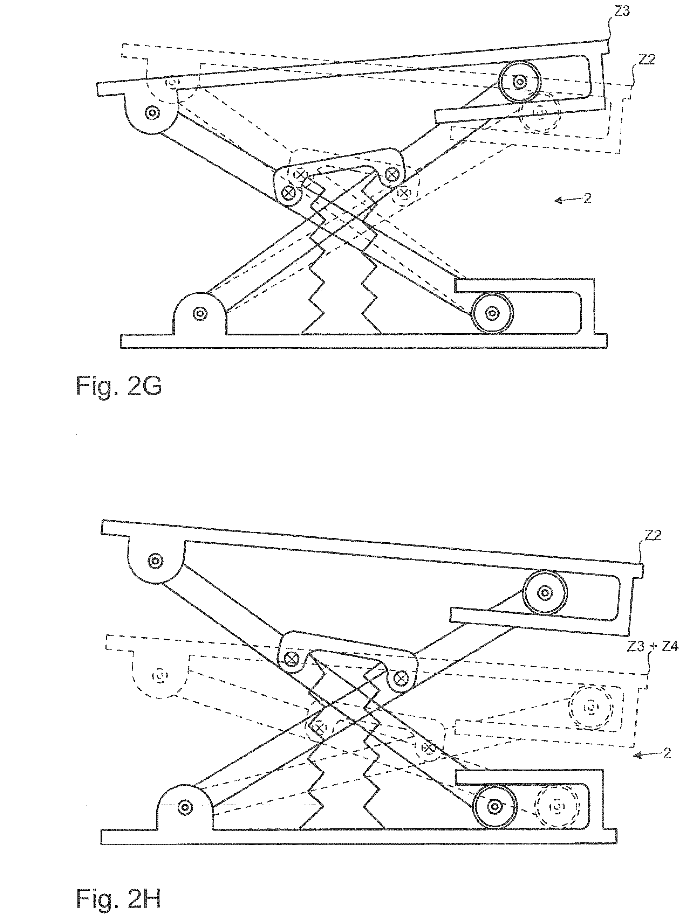

Die Figuren 2A-2H zeigen dabei einen Fahrzeugsitz gemäß der Figur 1A mit einem Federelement 9, welches vorliegend ausgebildet ist als eine elastisch deformierbare Luftfeder 21. Die Figur 2A zeigt dabei einen Fahrzeugsitz in einem ersten Zustand Z1, die Figur 2B den Fahrzeugsitz 1 in dem Zustand Z3, die Figur 2C den Fahrzeugsitz in dem Zustand Z2, die Figur 2D einen Vergleich zwischen dem Zustand Z1 und einem Zustand Z4, die Figur 2E einen Vergleich zwischen dem Zuständen Z1 und Z3, die Figur 2F einen Vergleich zwischen den Zuständen Z1 und Z2, die Figur 2G einen Vergleich der Zustände Z2 und Z3 und die Figur 2H einen Vergleich der Zustände Z2 und der Zustände Z2 + Z4.

Zur weiteren Verdeutlichung nochmals die Bedeutung der Zustände:
Z1 ist der Zustand ohne eine Krafteinwirkung auf den Fahrzeugsitz, Z2 ist ein zweiter Zustand, welcher eine Nickbewegung nach vorne in Fahrzeugsitzlängsrichtung L gesehen bedeutet, Z3 einen dritten Zustand, welcher eine Nickbewegung in Fahrzeugsitzlängsrichtung L gesehen nach hinten bedeutet, und Z4 welcher eine vertikale Bewegung des Fahrzeugsitzoberteils 3 gegenüber dem Fahrzeugsitzunterteil 4 bedeutet.

Durch die Bewegung des Fahrzeugsitzoberteils 3 gegenüber dem Fahrzeugsitzunterteil 4 in zumindest einem der Zustände Z2, Z3, Z4 wird das Federelement 9, welches hier ausgebildet ist als eine elastisch deformierbare Feder 21, das Federelement 9 bzw. die Luftfeder 21 elastisch deformiert, wodurch eine Federkraft F auf den Federelementträger 8 einwirkt. Durch das Hervorrufen einer Federkraft F auf den Federelementträger 8 in Kombination mit dem Hebel des Federelementträgers, welcher dargestellt ist durch den Abstand 27, wird ein Rückstellmoment bzw. Drehmoment M erzeugt, welche der entsprechenden Bewegung des Fahrzeugsitzoberteils 3 gegenüber dem Fahrzeugsitzunterteil 4 entgegenwirkt. Dies gilt entsprechend für jeden der Zustände Z2, Z3, Z4.

Wie weiter zu erkennen ist, ist in Fahrzeugsitzlängsrichtung L gesehen das erste Festlager 12 vor dem zweiten Festlager 13 angeordnet und das erste Loslager vor dem zweiten Loslager 15 angeordnet. Weiter ist zu erkennen, dass eine erste Länge 28 und eine zweite Länge 29 des ersten Scherenarms 5 unterschiedlich lang ausgebildet sind. Dies trifft insbesondere auf den Fahrzeugsitz 1 im ersten Zustand Z1 zu. Unter der ersten Länge 28 ist dabei der Abstand zwischen dem Kreuzungspunkt 7 und der entsprechenden Drehachse des ersten Festlagers 12 zu verstehen. Unter der zweiten Länge 29 entsprechend die Länge des Abstandes des Kreuzungspunkts 7 bis zu der Drehachse des ersten Loslagers 14. Entsprechendes gilt für die Abstände 30 und 31 des zweiten Scherenarms 6. Dabei ist die erste Länge 28 kleiner als die zweite Länge 29 und die vierte Länge 31 kleiner als die dritte Länge 30. Hierdurch wird eine gewisse Asymmetrie im Fahrzeugsitz bei einer Nickbewegung bzw. einer Federungsbewegung des Fahrzeugsitzes 1 hervorgerufen.

Darüber hinaus bestimmen die erste Länge 28 und die zweite Länge 29 ein Übersetzungsverhältnis einer Hubbewegung der Federung zu einer Hubbewegung des Federelementträgers 8 in vertikaler Richtung. Bei Anpassung der ersten Länge 28 und der zweiten Länge 29 kann es vorzugsweise erreicht werden, dass durch eine relativ kurze elastische Luftfeder 21 ein verhältnismäßig großer Hub der gesamten Federung erzielt wird.

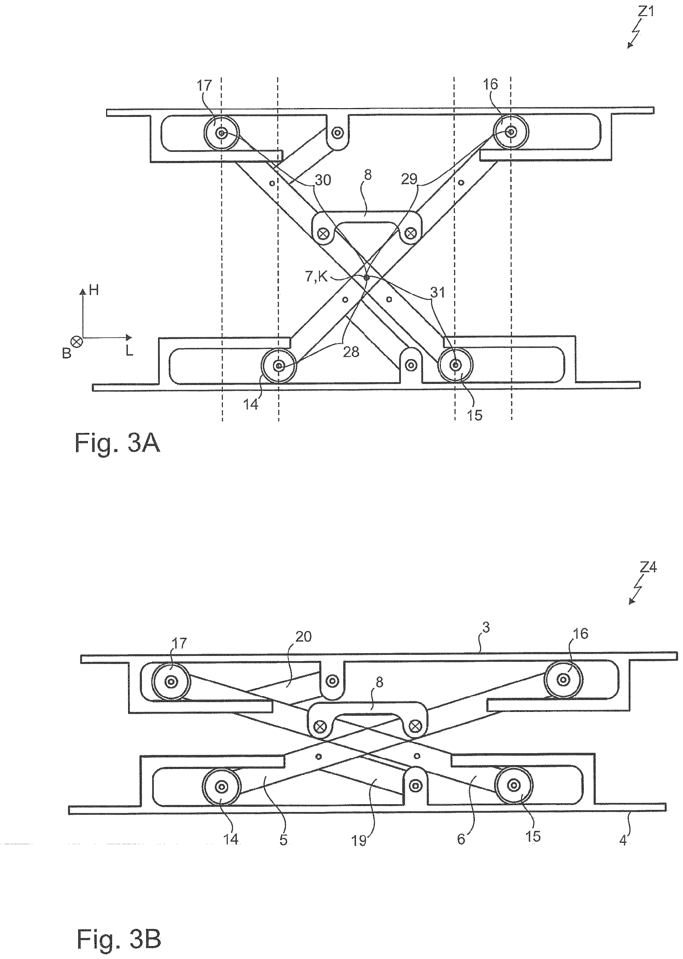

Die Figuren 3A-3E zeigen eine weitergehende Ausführungsform des Scherengestells bzw. der Scherengestellanordnung, wobei hier der erste Scherenarm 5 und der zweite Scherenarm 6 jeweils über zwei Loslager einerseits mit dem Fahrzeugsitzoberteil 3 und andererseits mit dem Fahrzeugsitzunterteil 4 verbunden ist. Das heißt, dass die zuvor beschriebenen Festlager hier durch weitere Loslager ersetzt wurden. Konkret gesagt, ist nun der erste Scherenarm 5 mittels eines ersten Loslagers 14 mit dem Fahrzeugsitzunterteil und mittels eines dritten Loslagers 16 mit dem Fahrzeugsitzoberteil 3 verbunden. Entsprechend ist der zweite Scherenarm 6 mittels eines zweiten Loslagers 15 mit dem Fahrzeugsitzunterteil 4 mittels eines vierten Loslagers 17 mit dem Fahrzeugsitzoberteil 3 verbunden. Da eine derartige Anordnung der Scherenarme 5, 6 mittels Loslager 14, 15, 16, 17 eine unbestimmte Führung des Fahrzeugsitzoberteils 3 gegenüber dem Fahrzeugsitzunterteil 4 hervorrufen würde, ist es notwendig, dass ein erstes Verbindungselement 19 vorgesehen ist, welches einerseits mit dem ersten Scherenarm 5 und andererseits mit dem Fahrzeugsitzunterteil 4 verbunden ist. Weiter ist ein zweites Verbindungselement 20 vorgesehen, welches mit dem zweiten Scherenarm einerseits und mit dem Fahrzeugsitzoberteil 3 andererseits verbunden ist. Insbesondere sind das erste Verbindungselement 19 und das zweite Verbindungselement 20 jeweils drehbar mit dem entsprechenden Scherenarm 5, 6 und dem Fahrzeugsitzoberteil 3 oder dem Fahrzeugsitzunterteil 4 drehbar verbunden.

Durch die Anbindung der Scherenarme 5, 6 das Fahrzeugsitzoberteil 3 bzw. das Fahrzeugsitzunterteil 4 mittels des ersten Verbindungselements 19 bzw. des zweiten Verbindungselements 20 werden die Freiheitsgrade des Scherengestells mit den Scherenarmen 5 und 6 wieder reduziert.

Besonders bevorzugt ist das erste Verbindungselement 19 drehbar um eine vierte Drehachse 34 mit dem ersten Scherenarm 5 und drehbar um eine fünfte Drehachse 35 mit dem Fahrzeugsitzunterteil 4 und das zweite Verbindungselement 20 drehbar um eine sechste Drehachse 36 mit dem zweiten Scherenarm 6 und drehbar um eine siebte Drehachse mit dem Fahrzeugsitzoberteil 3 verbunden.

Gemäß einer weiteren bevorzugten Ausführungsform ist ein erster Abstand des ersten Loslagers 14 zu der vierten Drehachse 35 gleich einem zweiten Abstand der fünften Drehachse 35 zu der vierten Drehachse 35 und gleich einem dritten Abstand der vierten Drehachse 35 zu einer Mittelachse 38 des ersten Schwingarms 5 bzw. einem Mittellager 38 des dritten Schwingarms 5. Durch diese Anordnung wird die Mittelachse somit im Wesentlichen exakt über der dritten Drehachse geführt, so dass dadurch keine horizontale Verlagerung der Mittelachse zu der dritten Drehachse zueinander stattfindet. Gleiches gilt vorzugsweise auch für das zweite Verbindungselement 20.

Die Begriffe Mittellager und Mittelachse können hierbei synonym verwendet werden.

Die Mittelachse kann dabei prinzipiell willkürlich gewählt werden. Durch die Lage der Mittelachse wird die Übersetzung der Schwinge vom Gesamthub des Oberteils zu dem Unterteil zum Hub des ersten Federelements, welches vorzugsweise zwischen dem ersten Elementträger und dem zweiten Elementträger oder der Grundplatte angeordnet ist, bestimmt.

Eine exakte Führung wie oben beschrieben wird erreicht, wenn die Mittelachse, die vierte Drehachse und die zweite Drehachse auf einer gemeinsamen Strecke liegen und die vierte Drehachse die halbe Länge der Strecke von der Mittelachse zu der zweiten Drehachse beschreibt.

Jedoch ist durch eine derartige Ausgestaltung des Scherengestells eine andere Ausprägung der Nickbewegung insbesondere möglich.

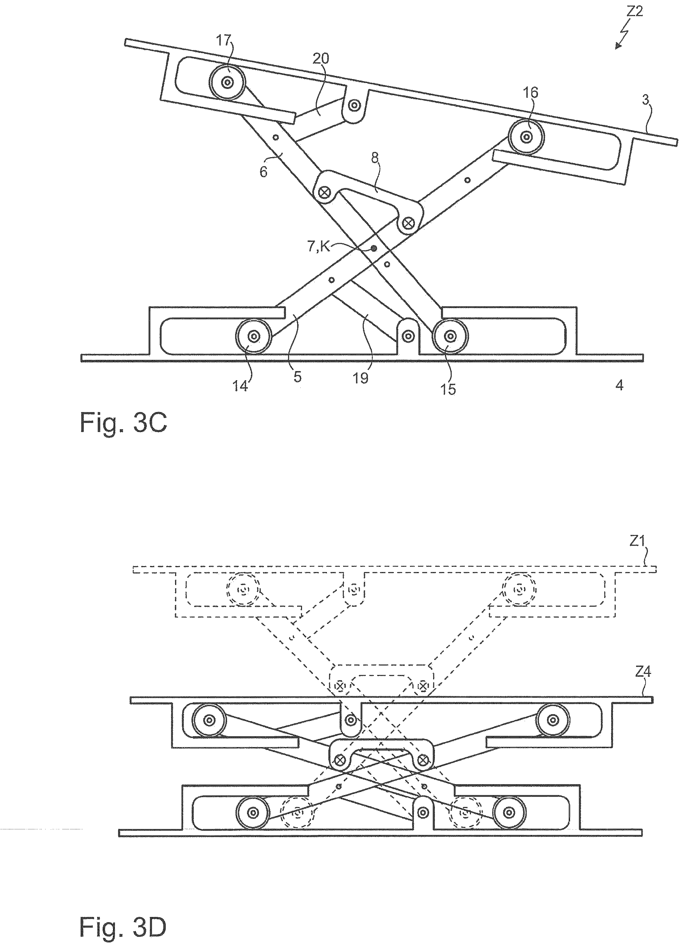

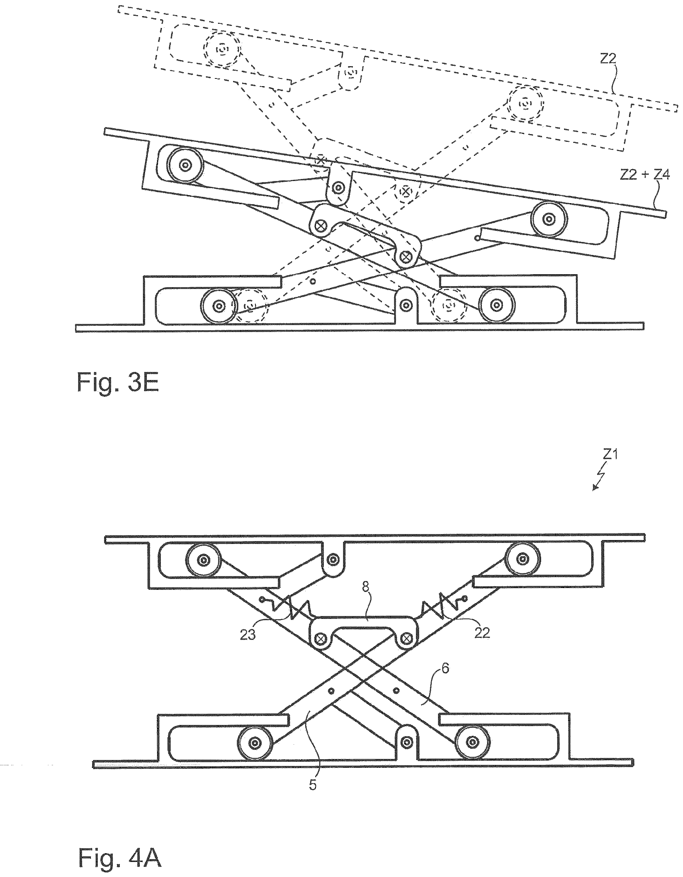

Dabei zeigt die Figur 3A den Fahrzeugsitz 1 in dem ersten Zustand Z1, die Figur 3B den Fahrzeugsitz 1 in dem Zustand Z4, die Figur 3C den Fahrzeugsitz 1 in dem Zustand Z2, die Figur 3D den Fahrzeugsitz 1 in einem Vergleich zwischen den Stellungen bzw. Zuständen 1 und Z4 und die Figur 3E einen Vergleich zwischen den Zuständen Z2 und der Kombination der Zustände Z2 und Z4.

Auch hier ist zu erkennen, dass das erste Loslager 14 in Fahrzeugsitzlängsrichtung L gesehen vor dem vierten Loslager 17 und das zweite Loslager 15 hinter dem dritten Loslager 16 angeordnet ist, wobei abhängig von dem Übersetzungsverhältnis auch das erste Loslager 14 hinter dem vierten Loslager 17 und das zweite Loslager 15 vor dem dritten Loslager 16 angeordnet sein kann.

Ebenso sind die erste Länge 28 von dem ersten Loslager 14 bis zum Kreuzungspunkt 7, die zweite Länge 29 von der ersten Drehachse bis zum dritten Loslager 16, die dritte Länge 30 von dem Kreuzungspunkt 7 bis zu dem vierten Loslager und die vierte Länge 31 von dem Kreuzungspunkt 7 bis zum zweiten Loslager 15 entsprechen dem vorhergehenden Beispielen gemäß den Figuren 2A-2H ausgebildet, das heißt, dass die erste Länge 28 kleiner ist als die zweite Länge 29 und die vierte Länge 31 kleiner ist als die dritte Länge 30.

Wie den Figuren 3A-3E zu entnehmen ist, ist zunächst kein Federelement gezeigt. Es ist jedoch möglich, dass entsprechend den Figuren 2A-2H ein Federelement in der Form einer elastisch deformierbaren Luftfeder 21 vorgesehen ist und entsprechend angeordnet ist.

Weiterer Ausführungen hinsichtlich der Federelemente können den nachfolgenden Figuren entnommen werden.

Beispielsweise sind den Figuren 4A und 4B sowie den Figuren 5A und 5B zwei weitere Ausführungsformen für ein Federelement 9 gezeigt.

Das Federelement der Figuren 4A und 4B besteht hierbei aus einer ersten Zugfeder 22 und einer zweiten Zugfeder 23. Die erste Zugfeder 22 ist dabei einerseits mit dem Federelementträger 8 und andererseits mit dem ersten Scherenarm 5 verbunden. Die zweite Zugfeder 23 ist ebenso mit dem Federelementträger 8 verbunden und andererseits mit dem zweiten Scherenarm 6.

Aus einem Vergleich der Figuren 4A und 4B zueinander kann erkannt werden, dass von einem Wechsel des Zustands Z1 zu einem Zustand Z2, das heißt, bei einem genickten Zustand des Fahrzeugsitzes 1, die zweite Zugfeder 23 entsprechend der Bewegung des Scherengestells bzw. des Federelementträgers 8 die zweite Zugfeder 23 gestreckt wird. Hierdurch wird ebenso eine Federkraft F erzeugt, welche auf den Federelementträger 8 wirkt und so entsprechend wiederum ein Rückspielmoment M erzeugt.

Die Figuren 5A und 5B zeigen eine weitere Ausführungsform eines Federelements, wobei das Federelement vorliegend durch ein Blattfederelement 18 ausgebildet ist. Das Blattfederelement 18 ist dabei einerseits biegesteif mit dem Federelementträger 8 verbunden und andererseits mittels einer Gleitverbindung mit dem zweiten Verbindungselement 20 verbunden. Die Gleitverbindung des Blattfederelements 18 mit dem zweiten Verbindungselement 20 wird durch das Bezugszeichen 32 angegeben. Das zweite Verbindungselement 20 kann auch einen Verlängerungsbereich aufweisen, wobei der Verlängerungsbereich mit dem Blattfederelement 18 in einer Gleitverbindung steht.

Durch einen Vergleich der Figuren 5A und 5B, wobei die Figur 5A den Fahrzeugsitz 1 in dem Zustand Z1 und die Figur 5B den Fahrzeugsitz 1 in dem Zustand Z2 zeigt, wird das Funktionsprinzip der Blattfeder nochmals dargestellt. Bei der Nickbewegung des Fahrzeugsitzes 1 in Fahrzeugsitzlängsrichtung L nach vorne wird aufgrund der biegesteifen Verbindung des Blattfederelements 18 mit dem Federelementträger 8 und der gleitenden Verbindung 32 das Blattfederelement verbogen, wodurch eine Rückstellkraft F auf den Federelementträger 8 hervorgerufen wird. Durch die gleitende Verbindung 32 kann ein überstehender Anteil 33 des Blattfederelementes 18 der Bewegung des Blattfederelements aufgrund der biegesteifen Verbindung mit dem Federelementträger 8 nachgeführt werden.

Die Figuren 6A-6D zeigen dabei zwei verschiedenen Ausführungsformen hinsichtlich der Anordnung des Federelementträgers 8 hinsichtlich des ersten Bereichs K bzw. des Kreuzungspunkts 7, sprich in Fahrzeugsitzhöhenrichtung H des Fahrzeugsitzes 1 gesehen.

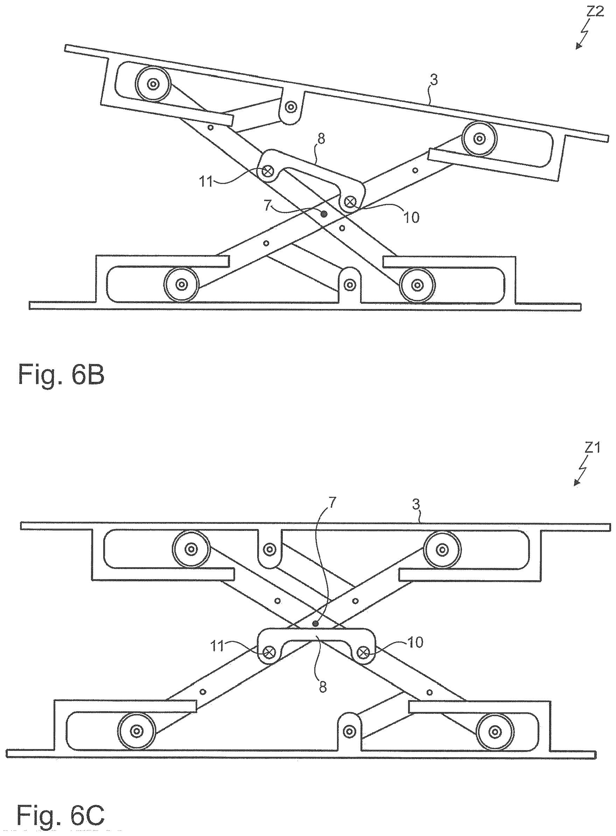

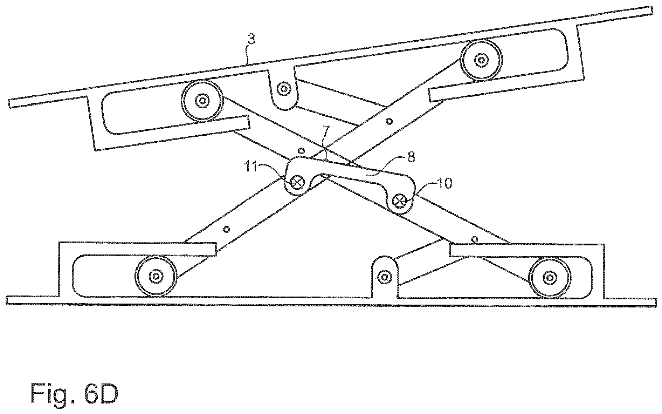

Dabei zeigen die Figuren 6A und 6B eine erste Ausführungsform und die Figuren 6C und 6D eine zweite Ausführungsform hinsichtlich der Befestigung des Federelementträgers 8.

Wie den Figuren 6A und 6B zu entnehmen ist, zeigt die Figur 6A den Fahrzeugsitz 1 in dem ersten Zustand Z1 und die Figur 6B in dem Zustand Z2. In jedem dieser Zustände ist dabei die zweite Drehachse 10 sowie die dritte Drehachse 11 in Fahrzeugsitzhöhenrichtung H gesehen oberhalb des ersten Bereichs K beziehungsweise dem Kreuzungspunkt 7 angeordnet. Dies gilt, insbesondere auch für den Zustand Z2 bzw. den Zustand Z3 und dem Zustand Z4, das heißt in jedem möglichen verschwenkten bzw. gennickten Zustand des Fahrzeugsitzes 1.

Die Figuren 6C und 6D hingegen zeigen eine Ausführungsform, in welcher die zweite Drehachse 10 und die dritte Drehachse 11 in Fahrzeugsitzhöhenrichtung H gesehen unterhalb dem ersten Bereich K beziehungsweise dem Kreuzungspunkt 7 angeordnet sind.

Aus einem Vergleich der Figuren 6A und 6B kann entnommen werden, dass durch diese Ausgestaltung die Federelementträger 8 der Bewegung des Federungsoberteils 3 nachgeführt wird, das heißt, dass sich der Federelementträger 8 in die selbe Richtung neigt, wie das Federungsoberteil 3.

Dem Vergleich der Figuren 6C und 6D hingegen kann entnommen werden, dass bei einer Neigung des Fahrzeugsitzoberteils aufgrund einer Nickung des Fahrzeugsitzes 1 der Federelementträger 8 sich in die entgegengesetzte Richtung der Neigung des Fahrzeugsitzoberteils 3 bewegt.

Nochmals zusammengefasst können entsprechend der vorliegenden Erfindung jegliche Ausführungsformen miteinander kombiniert und ergänzt werden. Gleiche Bauteile werden mit den selben Bezugszeichen versehen, wobei zur besseren Übersicht die Bezugszeichen weggelassen werden können.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Fahrzeugsitz
- 2: Nickfedereinheit
- 3: Fahrzeugsitzoberteil
- 4: Fahrzeugsitzunterteil
- 5: erster Scherenarm
- 6: zweiter Scherenarm
- 7: Kreuzungspunkt
- 8: Federelementträger
- 9: Federelement
- 10: zweite Drehachse
- 11: dritte Drehachse
- 12: erstes Festlager
- 13: zweites Festlager
- 14: erstes Loslager
- 15: zweites Loslager
- 16: drittes Loslager
- 17: viertes Loslager
- 18: Blattfederelement
- 19: erstes Verbindungselement
- 20: zweites Verbindungselement
- 21: Luftfeder
- 22: erste Zugfeder
- 23: zweite Zugfeder
- 24: erster Schenkel
- 25: zweiter Schenkel
- 26: Schenkelverbindung
- 27: Abstand
- 28: erste Länge
- 29: zweite Länge
- 30: dritte Länge
- 31: vierte Länge
- 32: Gleitverbindung
- 33: Anteil
- 34: vierte Drehachse
- 35: fünfte Drehachse
- 36: sechste Drehachse
- 37: siebte Drehachse
- Z1: erster Zustand
- Z2: zweiter Zustand
- Z3: dritter Zustand
- Z4: vierter Zustand
- K: erster Bereich
- L: Fahrzeugsitzlängsrichtung
- B: Fahrzeugsitzbreitenrichtung
- H: Fahrzeugsitzhöhenrichtung

## Patentansprüche

1. Fahrzeugsitz (1) mit Nickfedereinheit (2), wobei ein Fahrzeugsitzoberteil (3) und ein Fahrzeugsitzunterteil (4) des Fahrzeugsitzes (1) mittels einer Scherengestellanordnung, umfassend einen ersten Scherenarm (5) und einen zweiten Scherenarm (6), welche sich in einem ersten Bereich (K) in einer Fahrzeugsitzbreitenrichtung (B) gesehen kreuzen, relativ zueinander bewegbar verbunden sind, und wobei die Nickfedereinheit (2) einen Federelementträger (8) und ein Federelement (9) umfasst, **dadurch gekennzeichnet, dass** das Federelement (9) einerseits mit dem Fahrzeugsitzoberteil (3), dem Fahrzeugsitzunterteil (4) oder den Scherenarmen (5, 6) und andererseits mit dem Federelementträger (8) verbunden ist, welcher drehbar um eine zweite Drehachse (10) mit dem ersten Scherenarm (5) und drehbar um eine dritte Drehachse (11) mit dem zweiten Scherenarm (6) verbunden ist.

2. Fahrzeugsitz (1) nach Anspruch 1,
**dadurch gekennzeichnet, dass**
die Fahrzeugsitzbreitenrichtung (B), die zweite Drehachse (10) und die dritte Drehachse (11) parallel zueinander angeordnet sind.

3. Fahrzeugsitz (1) nach Anspruch 1 oder 2,
**dadurch gekennzeichnet, dass**
der erste Scherenarm (5) mittels eines ersten Festlagers (12) mit dem Fahrzeugsitzunterteil (4) mittels eines ersten Loslagers (14) mit dem Fahrzeugsitzoberteil (3) und der zweite Scherenarm (6) mittels eines zweiten Festlagers (13) mit dem Fahrzeugsitzoberteil (3) und mittels eines zweiten Loslagers (15) mit dem Fahrzeugsitzoberteil (3) verbunden sind.

4. Fahrzeugsitz (1) nach Anspruch 3,
**dadurch gekennzeichnet, dass**
in einer Fahrzeugsitzlängsrichtung (L) gesehen das erste Festlager (12) vor dem zweiten Festlager (13) und das zweite Loslager (15) hinter dem ersten Loslager (14) angeordnet sind; oder dass in einer Fahrzeugsitzlängsrichtung (L) gesehen das erste Festlager (12) hinter dem zweiten Festlager (13) und das zweite Loslager (15) vor dem ersten Loslager (14) angeordnet sind.

5. Fahrzeugsitz (1) nach Anspruch 1 oder 2,
**dadurch gekennzeichnet, dass**
der erste Scherenarm (5) mittels eines ersten Loslagers (14) mit dem Fahrzeugsitzoberteil (3) und mittels eines dritten Loslagers (16) mit dem Fahrzeugsitzunterteil (4) und der zweite Scherenarm (6) mittels eines zweiten Loslagers (15) mit dem Fahrzeugsitzunterteil (4) und mittels eines vierten Loslagers (17) mit dem Fahrzeugsitzoberteil (3) verbunden sind, wobei ein erstes Verbindungselement (19) den ersten Scherenarm (5) und das Fahrzeugsitzunterteil (4) und ein zweites Verbindungselement (20) den zweiten Scherenarm (6) und das Fahrzeugsitzoberteil (3) miteinander verbindet.

6. Fahrzeugsitz (1) nach Anspruch 5,
**dadurch gekennzeichnet, dass**
in einer Fahrzeugsitzlängsrichtung (L) das erste Loslager (14) vor dem zweiten Loslager (15) und das dritte Loslager (16) vor dem vierten Loslager (17) angeordnet sind; oder dass in einer Fahrzeugsitzlängsrichtung (L) das erste Loslager (14) hinter dem zweiten Loslager (15) und das dritte Loslager (16) hinter dem vierten Loslager (17) angeordnet sind.

7. Fahrzeugsitz (1) nach Anspruch 5 oder 6,
**dadurch gekennzeichnet, dass**
das Federelement (9) ein Blattfederelement (18) ist, welches einerseits mit dem Federelementträger (8) biegesteif verbunden und mit dem zweiten Scherenarm (6) mittels des zweiten Verbindungselements (20) gleitverbunden ist; oder. welches einerseits mit dem zweiten Verbindungselement (20) drehfest verbunden ist und andererseits mit dem Federträgerelement (8) durch ein lineares Führungselement in Fahrzeugsitzlängsrichtung gleitend verbunden ist

8. Fahrzeugsitz (1) nach einem der Ansprüche 1 bis 6,
**dadurch gekennzeichnet, dass**
das Federelement (9) eine elastisch deformierbare Luftfeder (21) ist, welche mit dem Federelementträger (8) und mit dem Fahrzeugsitzoberteil (3) oder dem Fahrzeugsitzunterteil (4) verbunden ist.

9. Fahrzeugsitz (1) nach Anspruch 5 oder Anspruch 6,
**dadurch gekennzeichnet, dass**
das Federelement (9) eine erste Zugfeder (22) und eine zweite Zugfeder (23) aufweist, wobei die erste Zugfeder (22) mit dem ersten Scherenarm (5) und dem Federelementträger (8) und die zweite Zugfeder (23) mit dem zweiten Scherenarm (6) und dem Federelementträger (8) verbunden ist.

10. Fahrzeugsitz (1) nach einem der Ansprüche 1 bis 9,
**dadurch gekennzeichnet, dass**
der Federelementträger (8) U-förmig ausgebildet ist mit einem ersten Schenkel (24), einem zweiten Schenkel (25) und einer Schenkelverbindung (26), wobei in Richtung der Schenkel (24, 25) gesehen die zweite Drehachse (10) und die dritte Drehachse (11) den gleichen Abstand zu der Schenkelverbindung (26) aufweisen.

11. Fahrzeugsitz (1) nach einem der Ansprüche 1-10,
**dadurch gekennzeichnet, dass**
die zweite Drehachse (10) und die dritte Drehachse (11) in einer Fahrzeugsitzhöhenrichtung (H) gesehen oberhalb oder unterhalb des ersten Bereichs (K) angeordnet sind.

## Claims

1. Vehicle seat (1) having a pitching spring unit (2), a vehicle seat upper part (3) and a vehicle seat lower part (4) of the vehicle seat (1) being connected such that they can be moved relative to one another by means of a scissor frame arrangement, comprising a first scissor arm (5) and a second scissor arm (6) which cross in a first region (K) as viewed in a vehicle seat width direction (B), and wherein the pitching spring unit (2) comprises a spring element carrier (8) and a spring element (9), **characterized in that** the spring element (9) is connected on one side to the vehicle seat upper part (3), the vehicle seat lower part (4) or the scissor arms (5, 6) and on the other side to the spring element carrier (8) which is connected to the first scissor arm (5) such that it can be rotated about a second rotational axis (10) and to the second scissor arm (6) such that it can be rotated about a third rotational axis (11).

2. Vehicle seat (1) according to Claim 1, **characterized in that** the vehicle seat width direction (B), the second rotational axis (10) and the third rotational axis (11) are arranged parallel to one another.

3. Vehicle seat (1) according to Claim 1 or 2, **characterized in that** the first scissor arm (5) is connected by means of a first locating bearing (12) to the vehicle seat lower part (4) and by means of a first floating bearing (14) to the vehicle seat upper part (3), and the second scissor arm (6) is connected by means of a second locating bearing (13) to the vehicle seat upper part (3) and by means of a second floating bearing (15) to the vehicle seat upper part (3).

4. Vehicle seat (1) according to Claim 3, **characterized in that**, as viewed in a vehicle seat longitudinal direction (L), the first locating bearing (12) is arranged in front of the second locating bearing (13), and the second floating bearing (15) is arranged behind the first floating bearing (14); or **in that**, as viewed in a vehicle seat longitudinal direction (L), the first locating bearing (12) is arranged behind the second locating bearing (13), and the second floating bearing (15) is arranged in front of the first floating bearing (14).

5. Vehicle seat (1) according to Claim 1 or 2, **characterized in that** the first scissor arm (5) is connected by means of a first floating bearing (14) to the vehicle seat upper part (3) and by means of a third floating bearing (16) to the vehicle seat lower part (4), and the second scissor arm (6) is connected by means of a second floating bearing (15) to the vehicle seat lower part (4) and by means of a fourth floating bearing (17) to the vehicle seat upper part (3), a first connecting element (19) connecting the first scissor arm (5) and the vehicle seat lower part (4) to one another, and a second connecting element (20) connecting the second scissor arm (6) and the vehicle seat upper part (3) to one another.

6. Vehicle seat (1) according to Claim 5, **characterized in that**, in a vehicle seat longitudinal direction (L), the first floating bearing (14) is arranged in front of the second floating bearing (15), and the third floating bearing (16) is arranged in front of the fourth floating bearing (17); or **in that**, in a vehicle seat longitudinal direction (L), the first floating bearing (14) is arranged behind the second floating bearing (15), and the third floating bearing (16) is arranged behind the fourth floating bearing (17).

7. Vehicle seat (1) according to Claim 5 or 6, **characterized in that** the spring element (9) is a leaf spring element (18) which is connected on one side to the spring element carrier (8) in a flexurally stiff manner, and is connected in a sliding manner to the second scissor arm (6) by means of the second connecting element (20); or which is connected fixedly on one side to the second connecting element (20) so as to rotate with it and is connected in a sliding manner on the other side to the spring carrier element (8) by way of a linear guide element in the vehicle seat longitudinal direction.

8. Vehicle seat (1) according to one of Claims 1 to 6, **characterized in that** the spring element (9) is an elastically deformable air spring (21) which is connected to the spring element carrier (8) and to the vehicle seat upper part (3) or the vehicle seat lower part (4).

9. Vehicle seat (1) according to Claim 5 or Claim 6, **characterized in that** the spring element (9) has a first tension spring (22) and a second tension spring (23), the first tension spring (22) being connected to the first scissor arm (5) and the spring element carrier (8), and the second tension spring (23) being connected to the second scissor arm (6) and the spring element carrier (8).

10. Vehicle seat (1) according to one of Claims 1 to 9, **characterized in that** the spring element carrier (8) is of U-shaped configuration with a first limb (24), a second limb (25) and a limb connection (26), the second rotational axis (10) and the third rotational axis (11) being at the same spacing from the limb connection (26) as viewed in the direction of the limbs (24, 25).

11. Vehicle seat (1) according to one of Claims 1 to 10, **characterized in that** the second rotational axis (10) and the third rotational axis (11) are arranged above or below the first region (K) as viewed in a vehicle seat vertical direction (H).

## Revendications

1. Siège de véhicule (1) avec unité de ressort à tangage (2), une partie supérieure de siège de véhicule (3) et une partie inférieure de siège de véhicule (4) du siège de véhicule (1) étant reliées de façon déplaçable l'une par rapport à l'autre au moyen d'un agencement de châssis à ciseaux, comportant un premier bras de ciseaux (5) et un second bras de ciseaux (6), lesquels se croisent vu dans une première région (K) dans une direction de largeur siège de véhicule (B),
et l'unité de ressort à tangage (2) comportant un support d'élément ressort (8) et un élément ressort (9),
**caractérisé par le fait que**
l'élément ressort (9) est relié, d'une part, à la partie supérieure de siège de véhicule (3), à la partie inférieure de siège de véhicule (4) ou aux bras de ciseaux (5, 6) et, d'autre part, au support d'élément ressort (8), lequel est relié au premier bras de ciseaux (5) de façon rotative autour d'un deuxième axe de rotation (10) et au second bras de ciseaux (6) de façon rotative autour d'un troisième axe de rotation (11).

2. Siège de véhicule (1) selon la revendication 1,
**caractérisé par le fait que**
la direction de largeur du siège de véhicule (B), le deuxième axe de rotation (10) et le troisième axe de rotation (11) sont disposés parallèlement entre eux.

3. Siège de véhicule (1) selon l'une des revendications 1 ou 2,
**caractérisé par le fait que**
le premier bras de ciseaux (5) est relié à la partie inférieure de siège de véhicule (4) au moyen d'un premier palier fixe (12) et à la partie supérieure de siège de véhicule (3) au moyen d'un premier palier libre (14), et le second bras de ciseaux (6) est relié à la partie supérieure de siège de véhicule (3) au moyen d'un deuxième palier fixe (13) et à la partie supérieure de siège de véhicule (3) au moyen d'un deuxième palier libre (15).

4. Siège de véhicule (1) selon la revendication 3,
**caractérisé par le fait que**
vu dans une direction de longueur de siège de véhicule (L), le premier palier fixe (12) est disposé devant le deuxième palier fixe (13) et le deuxième palier libre (15) est disposé derrière le premier palier libre (14); ou **par le fait que**, vu dans une direction de longueur de siège de véhicule (L), le premier palier fixe (12) est disposé derrière le deuxième palier fixe (13) et le deuxième palier libre (15) est disposé devant le premier palier libre (14).

5. Siège de véhicule (1) selon l'une des revendications 1 ou 2,
**caractérisé par le fait que**
le premier bras de ciseaux (5) est relié à la partie supérieure de siège de véhicule (3) au moyen d'un premier palier libre (14) et à la partie inférieure de siège de véhicule (4) au moyen d'un troisième palier libre (16) et le second bras de ciseaux (6) est relié à la partie inférieure de siège de véhicule (4) au moyen d'un deuxième palier libre (15) et à la partie supérieure du siège de véhicule (3) au moyen d'un quatrième palier libre (17), un premier élément de liaison (19) reliant l'un à l'autre le premier bras de ciseaux (5) et la partie inférieure de siège de véhicule (4) et un second élément de liaison (20) reliant l'un à l'autre le second bras de ciseaux (6) et la partie supérieure de siège de véhicule (3).

6. Siège de véhicule (1) selon la revendication 5,
**caractérisé par le fait que**
dans une direction de longueur de siège du véhicule (L), le premier palier libre (14) est disposé devant le deuxième palier libre (15) et le troisième palier libre (16) est disposé devant le quatrième palier libre (17) ; ou **par le fait que**, dans une direction de longueur de siège de véhicule (L), le premier palier libre (14) est disposé derrière le deuxième palier libre (15) et le troisième palier libre (16) est disposé derrière le quatrième palier libre (17).

7. Siège de véhicule (1) selon l'une des revendications 5 ou 6,
**caractérisé par le fait que**
l'élément ressort (9) est un élément ressort à lame (18), lequel, d'une part, est relié de façon rigide en flexion au support d'élément ressort (8) et est relié de manière coulissante au second bras de ciseaux (6) au moyen du second élément de liaison (20) ; ou lequel, d'une part, est relié de manière fixe en rotation au second élément de liaison (20) et, d'autre part, est relié de manière coulissante à l'élément support de ressort (8) par un élément de guidage linéaire dans la direction de longueur de siège de véhicule.

8. Siège de véhicule (1) selon l'une des revendications 1 à 6,
**caractérisé par le fait que**
l'élément ressort (9) est un ressort pneumatique élastiquement déformable (21), lequel est relié au support d'élément ressort (8) et à la partie supérieure de siège de véhicule (3) ou à la partie inférieure de siège de véhicule (4).

9. Siège de véhicule (1) selon l'une des revendications 5 ou 6,
**caractérisé par le fait que**
l'élément ressort (9) présente un premier ressort de traction (22) et un second ressort de traction (23), le premier ressort de traction (22) étant relié au premier bras de ciseaux (5) et au support d'élément ressort (8) et le second ressort de traction (23) étant relié au second bras de ciseaux (6) et au support d'élément ressort (8).

10. Siège de véhicule (1) selon l'une des revendications 1 à 9,
**caractérisé par le fait que**
le support d'élément ressort (8) est réalisé en forme de U avec une première branche (24), une seconde branche (25) et une liaison des branches (26), où, vu dans la direction des branches (24, 25), le deuxième axe de rotation (10) et le troisième axe de rotation (11) présentent la même distance à la liaison des branches (26).

11. Siège de véhicule (1) selon l'une des revendications 1 à 10,
**caractérisé par le fait que**
le deuxième axe de rotation (10) et le troisième axe de rotation (11) sont disposés au-dessus ou au-dessous de la première région (K), vu dans une direction de hauteur de siège de véhicule (H).
